(19) Europäisches Patentamt
European Patent Office
Office européen des brevets

(11) **EP 4 556 586 A1**

(12) **EUROPÄISCHE PATENTANMELDUNG**

(43) Veröffentlichungstag:
**21.05.2025 Patentblatt 2025/21**

(21) Anmeldenummer: 23210560.1

(22) Anmeldetag: **17.11.2023**

(51) Internationale Patentklassifikation (IPC):
*C22B 3/32* (2006.01)        *B01D 11/04* (2006.01)
*C22B 3/38* (2006.01)        *C22B 7/00* (2006.01)
*C22B 3/00* (2006.01)

(52) Gemeinsame Patentklassifikation (CPC):
**C22B 3/3842; B01D 11/04; C22B 3/26;
C22B 3/326; C22B 3/3844; C22B 3/3846;
C22B 7/007; C22B 23/0461**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **H.C. Starck Tungsten GmbH
80335 München (DE)**

(72) Erfinder:
  • **Egeberg, Alexander
    38640 Goslar (DE)**
  • **Olbrich, Armin
    38723 Seesen (DE)**

  • **Meese-Marktscheffel, Juliane
    38642 Goslar (DE)**
  • **Bäcker, Werner
    51688 Wipperfürth (DE)**
  • **Zeugner, Alexander
    38100 Braunschweig (DE)**
  • **Wolff, Alexander
    31188 Holle (DE)**
  • **Säuberlich, Tino
    38667 Bad Harzburg (DE)**

(74) Vertreter: **dompatent von Kreisler Selting Werner -
Partnerschaft von Patent- und Rechtsanwälten
mbB
Deichmannhaus am Dom
Bahnhofsvorplatz 1
50667 Köln (DE)**

(54) **VERFAHREN ZUR EXTRAKTION EINER METALLSPEZIES MITTELS FLÜSSIG-FLÜSSIG-REAKTIVEXTRAKTION**

(57)     Die vorliegende Erfindung betrifft ein Verfahren zur Extraktion einer Metallspezies aus einer wässrigen Lösung mittels flüssig-flüssig-Reaktivextraktion.

Figur 1

EP 4 556 586 A1

**Beschreibung**

Die vorliegende Erfindung betrifft ein Verfahren zur Extraktion einer Metallspezies aus einer wässrigen Lösung mittels flüssig-flüssig-Reaktivextraktion.

Extraktion bezeichnet allgemein jedes Trennverfahren, bei dem mit Hilfe eines Extraktionsmittels eine oder mehrere Komponenten aus einem Stoffgemisch herausgelöst wird. Bei der flüssig-flüssig-Extraktion wird durch ein flüssiges Extraktionsmittel ein gelöster Stoff aus einer Flüssigkeit extrahiert, wobei die verschiedenen Löslichkeiten der zu trennenden Komponenten in zwei nicht miteinander mischbaren Lösungsmitteln ausgenutzt werden. Als nicht miteinander mischbare Lösungsmittel dienen in der Regel eine hydrophile Phase wie Wasser und ein hydrophobes organisches Lösungsmittel. Eine Anwendung der flüssig-flüssig-Extraktion ist unter anderem die selektive Trennung von Metallionen, die im Rahmen der Elektromobilität und der Aufarbeitung verbrauchter Batterien immer mehr an Bedeutung gewinnt.

Allgemein liegt dem Prinzip der Reaktivextraktion die sogenannten Extraktionsisothermen zugrunde, die die Verteilung einer Metallspezies zwischen einer wässrigen Phase (AP) und einer organischen Phase (OP) zu einem dazugehörigen pH-Wert angibt. Der Extraktionsgrad E gibt den Anteil der Metallspezies M in der organischen Phase im Verhältnis zur Gesamtmenge der Metallspezies in beiden Phasen an, wobei E theoretisch alle Werte zwischen 0 und 1, beziehungsweise 0% und 100%, annehmen kann:

$$E = \frac{c_{OP} \cdot V_{OP}}{c_{OP} \cdot V_{OP} + c_{AP} \cdot V_{AP}}, \ E \in (0;1)$$

Gerade im Bereich des Batterierecyclings kommt der Trennung von Cobalt, Nickel und Mangan, sowie auch Lithium aus wässrigen Lösungen eine große Bedeutung zu. Im Stand der Technik sind eine Reihe von Ansätzen beschrieben, wie die Trennung optimiert werden kann.

Die Extraktion von Metallen beruht auf einer speziellen Form der Extraktion, der sogenannten Reaktivextraktion. Bei dieser Form der Solventextraktion wird die zu extrahierende Verbindung durch Reaktion mit einem im Extraktionsmittel gelösten Stoff in die andere Phase überführt. Die folgende Gleichung zeigt die zugrundeliegende chemische Reaktion und die Verteilung der verschiedenen Spezies auf wässrige und organische Phase, wie üblich durch einen Überstrich gekennzeichnet.

$$M^{2+} + \overline{(RH)_2} = \overline{MR_2} + 2H^+$$

$$K = \frac{[\overline{MR_2}][H^+]^2}{[M^{2+}][\overline{(RH)_2}]}$$

wobei M das Metallion, R einen Säurerest und K die Gleichgewichtskonstante bezeichnet.

Wie aus der Formulierung der Gleichgewichtskonstanten ersichtlich, sind diese Gleichgewichte pH-Wert abhängig. Metalle mit hoher Affinität, repräsentiert durch hohe Werte der Gleichgewichtskonstanten K, werden demnach bereits bei niedrigen pH-Werten, also aus wässrigen Medien mit hoher Acidität extrahiert, während die Metalle mit niedriger Affinität nur bei höheren pH-Werten aus der wässrigen Phase extrahiert werden können. Die Einstellung des pH-Wertes kann beispielsweise durch Zugabe von alkalischen Verbindungen wie NaOH erfolgen, die die bei der Reaktion entstehenden Protonen abfangen, bewerkstelligt werden.

Die Reaktivextraktion zur Trennung von Metallionen ist generell bekannt. So beschreiben D. Darvishi et al in ihrem Aufsatz "Synergistic effect of Cyanex 272 and Cyanex 302 on separation of cobalt and nickel by D2EHPA", erschienen in Hydrometallurgy 77 (2005) 227-238, die Vorteile, die durch Aktivierung des Komplexbildners D2EHPA durch Cyanex 272 und Cyanex 302 in der Trennung von Cobalt und Nickel erzielt werden konnten.

P.K. Parhi et al berichten über die Trennung von Nickel und Cobalt in einer ammoniakalischen Sulfatlösung mit Hilfe von Cyanex 272. Ihre Ergebnisse sind in "Separation of cobalt and nickel from ammoniacal sulphate solution using Cyanex 272", Separation and Purification Technology 59 (2008), 310-317, erschienen.

In "Extraction/Separation of Cobalt by Solvent Extraction: A Review", Appl. Chem. Eng. Vol. 26, No. 6, 2015, 631-639, fassen B. Swain *et al* verschiedene Methoden zur Abtrennung von Cobalt zusammen.

K. Omelchuk et al beschreiben in ihrer Veröffentlichung "New Cationic exchangers for the recovery of cobalt(I), nickel(I) and manganese(I) from acidic chloride solutions: Modelling of extraction curves", erschienen in Hydrometallurgy 180 (2018) 96-103, neuartige Extraktionsmittel zur Trennung der genannten Metallspezies.

N.B. Devi et al beschreiben die Trennung von Cobalt (II) und Nickel (II) mit Hilfe der Natriumsalze von D2EHPA, PC 88A und Cyanex 272 in "Separation and recovery of cobalt(II) and nickel(II) from sulphate solutions using sodium salt of D2EHPA, PC 88A and Cyanex 272", Hydrometallurgy 49 (1998) 47-61.

EP 2 614 868 offenbart die Verwendung einer Flüssig-Flüssig-Extraktionseinheit, um eine wässrige Phase mit einer organischen Phase zu kontaktieren, diese zu trennen und einen gewünschten Extrakt aus der so getrennten wässrigen Phase und/oder organischen Phase zu gewinnen.

Allen Ansätzen ist gemein, dass trotz der Unsicherheit, die mit der Aussagekraft des pH-Wertes einhergeht, die Trennung auf Basis von Extraktionsisothermen bei einem als "optimal" ermittelten pH-Wert durchgeführt wird.

Der pH-Wert ist allgemein definiert als der negative dekadische Logarithmus der Wasserstoffionen-Aktivität einer gegebenen Lösung:

$$pH = -lg_a(H^+)$$

Die beschriebene Technologie zur Trennung von Metallionen verwendet den pH-Wert als Regelgröße, was zwar generell anerkannt ist, allerdings ist die Messung des pH-Wertes in der Praxis mit sehr vielen Unsicherheiten behaftet.

Dies bedeutet insbesondere, dass aus einem gemessenen pH-Wert nicht auf die tatsächliche $H^+$-Konzentration einer Lösung geschlossen werden kann, der pH-Wert also in dieser Hinsicht eine unbefriedigende, mit Unsicherheit behaftete spezifische Regelgröße im Zusammenhang mit der hier beschriebenen Reaktivextraktion darstellt, um den Prozess stabil zu führen. Dies gilt insbesondere, wenn der Arbeitsbereich nur maximal wenige Zehntel pH-Einheiten umfasst.

Vor diesem Hintergrund besteht daher der Bedarf nach einem verbesserten Verfahren zur Trennung von Metallspezies und deren Gewinnung in sehr reiner Form aus wässrigen Lösungen, das vorzugsweise ohne den pH-Wert als Regelgröße auskommt.

Im Rahmen der vorliegenden Erfindung wurde überraschend gefunden, dass die flüssig-flüssig-Reaktivextraktion von Metallspezies aus wässrigen Lösungen mit Hilfe des aktivierten Extraktionsmittel und durch Einstellung eines definierten stöchiometrischen Verhältnisses zwischen dem aktivierten Extraktionsmittel und der zu extrahierenden Metallspezies ohne den pH-Wert als Regelgröße auskommt.

Daher ist ein erster Gegenstand der vorliegenden Erfindung ein Verfahren zur Extraktion einer Metallspezies aus einer wässrigen Lösung mittels flüssig-flüssig-Reaktivextraktion, das Verfahren umfassend die Schritte:

a) Bereitstellen einer wässrigen Phase umfassend mindestens eine zu extrahierende Metallspezies;

b) Bereitstellen einer organischen Phase umfassend ein Extraktionsmittel zur Extraktion der zu extrahierenden Metallspezies;

c) Aktivierung des Extraktionsmittels in der organischen Phase mit einem Aktivierungsmittel;

d) Kontaktieren der wässrigen Phase und der organischen Phase aus Schritt c);

e) Trennen der wässrigen Phase und der organischen Phase umfassend mindestens einen Teil der extrahierten Metallspezies,

dadurch gekennzeichnet, dass das aktivierte Extraktionsmittel und die zu extrahierenden Metallspezies in einem definierten stöchiometrischen Verhältnis zueinander vorliegen.

Ohne an eine bestimmte Theorie gebunden zu sein, wird angenommen, dass durch das Extraktionsmittel der Übergang der Metallspezies von der wässrigen in die organische Phase gefördert wird. Dazu wird das Extraktionsmittel erfindungsgemäß aktiviert. Dadurch, dass ein vorgegebenes, dem Trennproblem angepasstes, stöchiometrisches Angebot an aktiviertem Extraktionsmittel in Bezug auf die zu extrahierende Metallspezies zur Verfügung gestellt wird, kann auf den pH-Wert als Regelgröße für den Arbeitspunkt verzichtet und die mit der Bestimmung des pH-Werts verbundene Unsicherheit vermieden werden.

Bei der Extraktion gilt es generell einen akzeptablen Kompromiss zwischen Qualität und Reinheit der zu extrahierenden Spezies und der Ausbeute zu finden. Im Rahmen des erfindungsgemäßen Verfahrens hat sich überraschend gezeigt, dass durch die pH-Wert unabhängige Verfahrensführung die zu extrahierende Spezies in hoher Reinheit und Ausbeute gewonnen werden konnte.

Im Rahmen des erfindungsgemäßen Verfahrens wird das Extraktionsmittel durch ein Aktivierungsmittel aktiviert. Die Aktivierung des Extraktionsmittels erfolgt vorzugsweise vor der Kontaktierung der wässrigen Phase und der organischen Phase. Das Aktivierungsmittel wird also vorzugsweise bereits in der benötigten Menge der organischen Phase vor der Kontaktierung mit der wässrigen Phase beigefügt. Diese Vorkontaktierung kann sowohl kontinuierlich als auch im batch-Verfahren erfolgen.

Das erfindungsgemäße Verfahren sieht vor, dass das aktivierte Extraktionsmittel in einem definierten Verhältnis zu der zu extrahierenden Metallspezies bereitgestellt wird. Es wurde überraschend gefunden, dass über die Einstellung dieses Verhältnisses die Trennleistung und Selektivität der Extraktion gesteuert werden kann. Daher umfasst das erfindungsgemäße Verfahren in einer bevorzugten Ausführungsform weiterhin einen Schritt, in dem das stöchiometrische Verhältnis von aktiviertem Extraktionsmittel zu der zu extrahierenden Metallspezies gemäß einem vorab definierten Verhältnis eingestellt wird.

Das Einstellen des definierten stöchiometrischen Verhältnisses kann beispielsweise auf Basis der Konzentration der zu extrahierenden Metallspezies vorgenommen werden. Daher ist eine Ausführungsform des erfindungsgemäßen Verfahrens bevorzugt, in der in einem vorgeschalteten Schritt die Konzentration zumindest der zu extrahierenden Metallspezies in der wässrigen Phase bestimmt wird.

Das Extraktionsmittel ist vorzugsweise ausgewählt aus der Gruppe der Komplexbildner und flüssigen Ionentauscher und entsprechend in der Lage mit der zu extrahierenden Metallspezies einen Komplex auszubilden. In einer besonders bevorzugten Ausführungsform ist das Extraktionsmittel ausgewählt aus der Gruppe der Organophosphinsäuren, Organophosphonsäuren und Organophosphorsäuren. Ganz besonders bevorzugte Extraktionsmittel sind solche ausgewählt aus der Gruppe bestehend aus (Bis-2-(ethyl-hexyl)-phosphorsäure (D2EHPA), Bis(1,3-dibutoxypropan-2-yl)-phosphorsäure (Bidiopp), Bis(1,3-diisobutoxypropan-2-yl)-phosphorsäure (IPA), Bis(5,8,12,15-tetraoxanonadecan-10-yl)-phosphorsäure (TPA), Bis(undecan-6-yl)-phosphorsäure (UPA), Bis(1,3-dioctyloxypropan-2-yl)-phosphorsäure (OPA), Bis(1,3-di-2-ethylhexyloxypropan-2-yl)-phosphorsäure (EHPA) und Bis(2,4,4-trimethylpentyl)-phosphinsäure (Cyanex 272). Als besonders vorteilhaft hat sich auch die Verwendung von Mischungen der soeben aufgezählten Extraktionsmittel erwiesen, sowie die Verwendung eines Gemischs verzweigter Monocarbonsäuren, sowie andere organische Säuren erwiesen, die entsprechend im Rahmen der vorliegenden Erfindung bevorzugt verwendet werden. Entsprechende Produkte sind beispielsweise unter der Bezeichnung Versatic™ Acid kommerziell erhältlich.

Das Aktivierungsmittel aktiviert das Extraktionsmittel, beispielsweise durch Deprotonierung desselben. Entsprechend wird das Aktivierungsmittel vorzugsweise auf das Extraktionsmittel abgestimmt. Dabei kann das Aktivierungsmittel beispielsweise ausgewählt sein aus der Gruppe der Alkalihydroxide und/oder Ammoniak. Insbesondere handelt es sich bei dem Aktivierungsmittel um Natriumhydroxid oder Lithiumhydroxid. In diesem Falle können die Aktivierung des Extraktionsmittels und die anschließende Extraktion des Wertmetalls entsprechend der beiden folgenden Gleichungen formuliert werden.

$$\text{Aktivierung:} \quad \overline{(RH)_2} + 2\,NaOH = 2\,\overline{RNa} + 2\,H_2O$$

$$\text{Extraktion:} \quad M^{2+} + 2\,\overline{RNa} = \overline{MR_2} + 2\,Na^+$$

Für diese Prozessführung wurde überraschend gefunden, dass bei der Aktivierung des Extraktionsmittels mit Natronlauge diese vollständig von der organischen Phase aufgenommen werden kann. Als besonders vorteilhaft hat sich die Verwendung von Natronlauge in einer Konzentration von mindestens 40 Ma-% oder mehr erwiesen. Gute Ergebnisse konnten bereits bei Verwendung von 20 Ma-% D2EPAH in Escaid™, wie beispielsweise von Exxon Mobil erhältlich, mit verdünnter Natronlauge von 20 Ma-% bei 50 °C erzielt werden, die Aktivierung mit 40 Ma-% Natronlauge führte darüber hinaus überraschend zu einer einzigen Phase, die auch nach Abkühlen auf Raumtemperatur stabil blieb. Dieses Verhalten vereinfacht die technische Umsetzung bedeutend. Es entfällt eine Phasentrennung, die Aktivierungsstöchiometrie lässt sich genau definiert über exakte Massenflüsse einstellen, ohne auf pH-Wert oder andere Regelgrößen angewiesen zu sein. Der gewünschte Aktivierungsanteil des Extraktionsmittels kann direkt oder auch im Anschluss an die Aktivierung durch Zumischen von nichtaktivierter organischer Phase eingestellt werden.

Das erfindungsgemäße Verfahren zielt auf die Trennung von Metallspezies ab, wobei insbesondere Übergangsmetalle und Seltenerdmetalle bevorzugt sind. Die Metallspezies sind vorzugsweise ausgewählt aus der Gruppe bestehend aus Cobalt, Nickel, Mangan, Eisen, Kupfer, Magnesium, Aluminium, und Lithium. Insbesondere handelt es sich bei der Metallspezies um Cobalt, Nickel, Mangan und Aluminium.

Die organische Phase ist mit der wässrigen Phase nicht mischbar. Daher werden als organische Phase im Rahmen des erfindungsgemäßen Verfahrens vorzugsweise aliphatische und aromatische Kohlenwasserstoffe sowie Mischungen hiervon verwendet. Hier haben sich insbesondere Kerosin oder Escaid™ 120, wie von Exxon Mobile kommerziell erhältlich, als besonders geeignet erwiesen.

Das erfindungsgemäße Verfahren ist hauptsächlich auf den groß-industriellen Maßstab ausgelegt und wird vorzugsweise im mehrstufigen Gegenstrom als kontinuierliches Verfahren durchgeführt. In einer alternativ bevorzugten Ausführungsform wird das erfindungsgemäße Verfahren im Batch-Betrieb ausgeführt.

Das erfindungsgemäße Verfahren erlaubt nicht nur die Extraktion einer Metallspezies aus einer wässrigen Lösung, sondern kann auch zur selektiven Trennung mehrerer Metallspezies voneinander eingesetzt werden. Daher ist eine Ausführungsform bevorzugt, in der die wässrige Phase wenigstens eine weitere Metallspezies umfasst, die zumindest teilweise in der wässrigen Phase verbleibt. Durch Einstellen eines entsprechenden stöchiometrischen Verhältnisses kann nicht nur die Trennleistung erhöht werden, sondern auch die Menge an weiterer Metallspezies, die mit in die organische Phase überführt wird, festgelegt werden, so dass ein gewünschtes Verhältnis der Metallspezies in der organischen Phase erreicht wird. Zur Gewährleistung der Reinheit der Hauptkomponente kann der Extraktion ein Waschschritt, besonders bevorzugt im Sinne einer Verstärkungsextraktion, angeschlossen werden, bei dem die beladene organische Phase beispielsweise mit reiner Lösung der Hauptkomponente und/oder mineralischen Säuren, insbesondere Schwefelsäure, kontaktiert wird, wodurch die Nebenkomponenten wieder aus der organischen Phase herausdrängt werden, wie z.B. bei der Trennung von Übergangsmetallen im Sulfatsystem. Entsprechend umfasst das erfindungsgemäße Verfahren weiterhin einen Waschschritt, der sich der Extraktion anschließt.

Das erfindungsgemäße Verfahren stellt eine Verbesserung zu herkömmlichen Trennverfahren da, die auf den pH-Wert als Regelgröße vertrauen. Entsprechend ist eine Ausführungsform bevorzugt, in der das Verfahren keiner pH-Wert abhängigen Regelung unterliegt. Zwar kann der pH-Wert im Rahmen des erfindungsgemäßen Verfahrens als Indikator gemessen werden, die benötigte Menge an Aktivierungsmittel wird allerdings vorzugsweise an den gewünschten Stellen über genaue gravimetrische Dosierungen, vorzugsweise Coriolis-Massedurchflussmesser, zudosiert. Insbesondere bei der Nutzung von Extraktionskolonnen ist der Ansatz mit aktiviertem Extraktionsmittel und definierten stöchiometrischen Verhältnissen zu bevorzugen.

Das erfindungsgemäße Verfahren kann in Mixer-Settler-Batterien oder in Extraktionskolonnen durchgeführt werden, wobei die Durchführung in Extraktionskolonnen bevorzugt ist. Geeignete Extraktionskolonnen sind dem Fachmann bekannt und weisen vorzugsweise Stoffaustauschelemente zur Erhöhung der Kontaktfläche und Vermischung zwischen organischer und wässriger Phase auf.

Ein weiterer Gegenstand der vorliegenden Erfindung ist eine Vorrichtung zur Durchführung des erfindungsgemäßen Verfahrens, wobei die Vorrichtung einen Reaktor zur Kontaktierung einer wässrigen mit einer organischen Phase umfasst und wobei der Reaktor mindestens einen Ablass zur Entnahme der wässrigen und/oder der organischen Phase aufweist.

Als Reaktoren in der erfindungsgemäßen Vorrichtung kommen insbesondere Mixer-Settler-Batterien und Extraktionskolonnen in Frage, wobei die Extraktionskolonnen bevorzugt sind. Durch den Einsatz einer Extraktionskolonne lässt sich der Platzbedarf deutlich reduzieren und die im Umlauf befindlichen Mengen an organischer und wässriger Phase können geringgehalten werden. Weiterhin wird durch den Einsatz der Extraktionskolonnen eine Kontinuität des Gegenstroms gewährleistet, wobei nur eine einzige Phasengrenze am Kolonnenkopf oder aber am Kolonnensumpf reguliert werden muss. Auch die Erstellungskosten sind für eine Kolonne signifikant geringer als für große Mixer-Settler-Batterien.

In einer weiterhin bevorzugten Ausführungsform weist die erfindungsgemäße Vorrichtung weiterhin ein Modul zur Vorkontaktierung der organischen Phase mit dem Aktivierungsmittel auf.

Die vorliegende Erfindung wird anhand der folgenden Beispiele und Zeichnungen näher erläutert, wobei diese keinesfalls als Einschränkung des Erfindungsgedankens zu verstehen sind.

Figuren

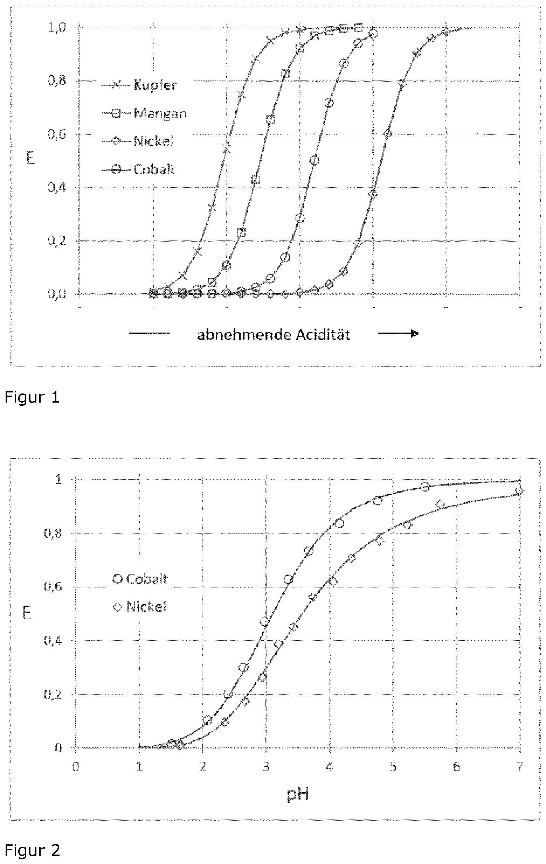

Figur 1 zeigt schematisch einen beispielhaften Verlauf des Extraktionsgrads bei der Trennung von Mn-, Cu-, Co- und Ni-Ionen, wobei bei E = 0 die entsprechende Metallspezies vollständig in der wässrigen Phase verbleibt und E = 1 einen vollständigen Übergang in die organische Phase anzeigt. Abhängig von der Azidität der Lösung lässt sich so beispielsweise eine organische Phase erhalten, die einen Großteil der Cu- und Mn-Ionen enthält, sowie ein wässriges Raffinat, in welchem der Großteil der Co- und Ni-Ionen verbleibt. Je nach vorherrschender Azidität kann so gezielt die Trennung der unterschiedlichen Metallspezies voneinander gesteuert werden.

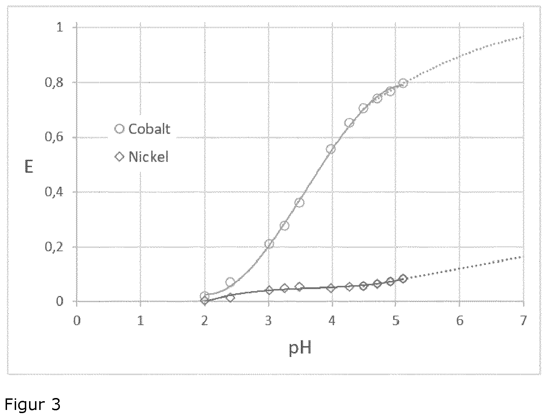

Figur 2 und 3 zeigen experimentell bestimmte Extraktionsisothermen für Cobalt und Nickel. Figur 2 zeigt die einzeln aufgenommen Isothermen, während Figur 3 die Extraktionsthermen von einer wässrigen Lösung, enthaltend beide Metalle in gleicher Konzentration zeigt. Deutlich ist ein Konkurrenzverhalten um das knapp angebotene Extraktionsmittel gemäß dem erfindungsgemäßen Verfahren zu beobachten. Aufgrund seiner höheren Affinität zum Extraktionsmittel drängt das Cobalt die Mitextraktion von Nickel zurück und die Isothermen schieben sich drastisch auseinander. Die auf diese Weise mit den beiden Metallen beladene organische Phase kann anschließend durch Kontakt mit einer nur Cobalt enthaltenden Waschlösung oder durch Waschen mit einer mineralischen Säure wie Schwefelsäure von den unerwünschten Nickelanteilen befreit werden. Zu beachten ist, dass hier eine einzige Extraktionsstufe gezeigt ist. Durch Gegenstromfahrweise sowohl für den Extraktionsprozess als auch für das Waschverfahren lassen sich dann hohen Ausbeuten bei gleichzeitig hoher Reinheit realisieren. Als Apparate kommen Mixer-Settler und Kolonnen in Frage.

Beispiele

Das erfindungsmäße Verfahren wurde in einem ersten Batch-Ansatz erprobt.

600 ml einer äquimolaren Co- und Ni-haltigen Lösung mit 40 g/L Co und 39,88 g/L Ni wurden aus den jeweiligen Chloridsalzen hergestellt und unter Rühren mit 1576 ml einer organischen Lösung kontaktiert, die 20 mol-% Bis-2-(ethyl-hexyl)-phosphorsäure (DEHPA) als Extraktionsmittel enthielt. Bei 40 °C wurden eine 50%-ige NaOH-Lösung als Aktivierungsmittel verwendet. Tabelle 1 zeigt das stöchiometrische Verhältnis von Extraktionsmittel, Natronlauge und dem zu extrahierenden Co. Nach erfolgter Phasentrennung wurde der Gehalt an Co und Ni jeweils in der organischen und der wässrigen Phase bestimmt. Tabelle 2 fasst die Ergebnisse der Analyse zusammen.

Tabelle 1:

| Einsatzstoff | Mol |
|---|---|
| Co (in wässriger Phase) | 0,407 |
| DEHPA (in organischer Phase) | 0,819 |
| NaOH | 0,876 |

Tabelle 2:

| | Co | Ni |
|---|---|---|
| organische Phase | 13,30 g/L | 1,84 g/L |
| Wässrige Phase | 2,78 g/L | 30,31 g/L |
| D(M)* | 4,77 | 0,060 |
| * Verteilungskoeffizient: D = $M_{OP}/M_{AP}$ mit M = Co, Ni; OP: organische Phase; AP: wässrige Phase | | |

Wie der Tabelle zu entnehmen ist, wird durch das erfindungsgemäße Verfahren eine effiziente Trennung von Co und Ni durch Reaktivextraktion des Co aus der wässrigen Phase erreicht. Aus den auf Basis der gemessenen Konzentrationen bestimmten Verteilungskoeffizienten D ergibt sich ein Trennfaktor ($\omega = D_{Co}/D_{Ni}$) von 79. Vergleichbare Versuche bei einem pH-Wert von 3,5 mit gleichem Extraktionsmittel und unter den gleichen Extraktionsbedingungen legen einen Trennfaktor von 3 nahe. Durch das erfindungsgemäße Verfahren kann somit eine erhebliche Steigerung der Selektivität erreicht werden.

Das erfindungsgemäße Verfahren stellt somit eine einfache und effiziente Alternative zur pH-Wert kontrollierten Extraktion dar, da lediglich die Menge der zu extrahierenden Metallspezies bekannt sein muss.

Durch eine kontinuierliche Verfahrensführung konnte die Trennleistung weiter erhöht werden. Der oben beschriebene Versuch wurde daher in einer kontinuierlich betriebenen Mixer-Settler-Anlage wiederholt. Der Versuch wurde mit 6 Mixer-Settler-Einheiten mit jeweils einem Volumen von 350 ml durchgeführt, wobei die organische Phase mit einer 200 g/L-NaOH-Lösung vorkontaktiert wurde.

Nach einer Versuchsdauer von 16 Stunden ließen sich gemäß den in Tabelle 3 gemessenen Konzentrationen von Co und Ni Verteilungskoeffizienten von D(Co) = 20,77 und D(Ni) = 0,011 berechnen. Basierend darauf ergibt sich ein Trennfaktor ($\omega = D_{Co}/D_{Ni}$) von 1888.

Tabelle 3:

| | Co | Ni |
|---|---|---|
| organische Phase | 13,50 g/L | 0,3 g/L |
| wässrige Phase | 0,65 g/L | 28 g/L |
| D(M)* | 20,77 | 0,011 |

**Patentansprüche**

1. Verfahren zur Extraktion einer Metallspezies aus einer wässrigen Lösung mittels flüssig-flüssig-Reaktivextraktion, das Verfahren umfassend die Schritte:

   a) Bereitstellen einer wässrigen Phase umfassend eine zu extrahierende Metallspezies;
   b) Bereitstellen einer organischen Phase umfassend ein Extraktionsmittel zur Extraktion der zu extrahierenden Metallspezies;
   c) Aktivierung des Extraktionsmittels in der organischen Phase mit einem Aktivierungsmittel;
   d) Kontaktieren der wässrigen Phase und der organischen Phase aus Schritt c);
   e) Trennen der wässrigen Phase und der organischen Phase umfassend mindestens einen Teil der extrahierten Metallspezies,

   **dadurch gekennzeichnet, dass** das aktivierte Extraktionsmittel und die zu extrahierenden Metallspezies in einem definierten stöchiometrischen Verhältnis zueinander vorliegen.

2. Verfahren gemäß Anspruch 1, **dadurch gekennzeichnet, dass** die Aktivierung des Extraktionsmittels vor der Kontaktierung der wässrigen und organischen Phase erfolgt.

3. Verfahren gemäß wenigstens einem der vorhergehenden Ansprüche, **dadurch gekennzeichnet**, das Verfahren weiterhin einen Schritt umfasst, in dem das stöchiometrische Verhältnis von aktiviertem Extraktionsmittel zu der zu extrahierenden Metallspezies eingestellt wird.

4. Verfahren gemäß wenigstens einem der vorangehenden Ansprüche, **dadurch gekennzeichnet, dass** in einem vorgeschalteten Schritt die Konzentration zumindest der zu extrahierenden Metallspezies in der wässrigen Phase bestimmt wird.

5. Verfahren gemäß wenigstens einem der vorangehenden Ansprüche, **dadurch gekennzeichnet, dass** das Extraktionsmittel ausgewählt ist aus der Gruppe der Komplexbildner und flüssigen Ionentauscher.

6. Verfahren gemäß wenigstens einem der vorangehenden Ansprüche, **dadurch gekennzeichnet, dass** das Verfahren weiterhin einen Waschschritt der abgetrennten organischen Phase umfasst.

7. Verfahren gemäß wenigstens einem der vorangehenden Ansprüche, **dadurch gekennzeichnet, dass** das Extraktionsmittel ausgewählt ist aus der Gruppe der Organophosphinsäuren, Organophosphonsäuren und Organophosphorsäuren, insbesondere aus der Gruppe bestehend aus (Bis-2-(ethyl-hexyl)-phosphorsäure (D2EHPA), Bis(1,3-dibutoxypropan-2-yl)-phosphorsäure (Bidiopp), Bis(1,3-diisobutoxypropan-2-yl)-phosphorsäure (IPA), Bis(5,8,12,15-tetraoxanonadecan-10-yl)-phosphorsäure (TPA), Bis(undecan-6-yl)-phosphorsäure (UPA), Bis(1,3-dioctyloxypropan-2-yl)-phosphorsäure (OPA), Bis(1,3-di-2-ethylhexyloxypropan-2-yl)-phosphorsäure (EHPA), Bis(2,4,4-trimethylpentyl)-phosphinsäure (Cyanex 272); Gemische der genannten Extraktionsmittel sowie aus Gemischen verzweigter Monocarbonsäuren und anderer organischer Säuren.

8. Verfahren gemäß wenigstens einem der vorangehenden Ansprüche, **dadurch gekennzeichnet, dass** das Aktivierungsmittel ausgewählt ist aus der Gruppe Alkalihydroxide und insbesondere Natriumhydroxid oder Lithiumhydroxid ist.

9. Verfahren gemäß wenigstens einem der vorangehenden Ansprüche, **dadurch gekennzeichnet, dass** die Metallspezies ausgewählt sind aus der Gruppe der Übergangsmetalle und Seltenerdmetalle, insbesondere aus der Gruppe bestehend aus Cobalt, Nickel, Mangan, Eisen, Kupfer, Magnesium, Aluminium, und Lithium, insbesondere handelt es sich bei der Metallspezies um Cobalt, Nickel, Mangan und Aluminium.

10. Verfahren gemäß wenigstens einem der vorangehenden Ansprüche, **dadurch gekennzeichnet, dass** die organische Phase ausgewählt ist aus der Gruppe der aliphatischen und aromatischen Kohlenwasserstoffe sowie Mischungen hiervon.

11. Verfahren gemäß wenigstens einem der vorangehenden Ansprüche, **dadurch gekennzeichnet, dass** das Verfahren als batch-Verfahren oder kontinuierliches Verfahren durchgeführt wird.

**12.** Verfahren gemäß wenigstens einem der vorangehenden Ansprüche, **dadurch gekennzeichnet, dass** die wässrige Phase mindestens eine weitere Metallspezies umfasst, wobei diese weitere Metallspezies wenigstens teilweise in der wässrigen Phase verbleibt.

**13.** Verfahren gemäß wenigstens einem der vorangehenden Ansprüche, **dadurch gekennzeichnet, dass** das Verfahren keiner pH-Wert abhängigen Regelung unterliegt, insbesondere **dadurch gekennzeichnet, dass** keine Messung des pH-Werts erfolgt.

**14.** Verfahren gemäß wenigstens einem der vorangehenden Ansprüche, **dadurch gekennzeichnet, dass** das Verfahren in einer Extraktionskolonne durchgeführt wird.

**15.** Vorrichtung zur Durchführung des erfindungsgemäßen Verfahrens, wobei die Vorrichtung einen Reaktor zur Kontaktierung einer wässrigen mit einer organischen Phase umfasst und wobei der Reaktor mindestens einen Ablass zur Entnahme der wässrigen und/oder der organischen Phase aufweist.

**16.** Vorrichtung gemäß Anspruch 15, **dadurch gekennzeichnet, dass** es sich bei dem Reaktor um eine Extraktionskolonne handelt und/oder die Vorrichtung weiterhin Modul zur Vorkontaktierung der organischen Phase mit dem Aktivierungsmittel umfasst.

Figur 1

Figur 2

Figur 3

Europäisches
Patentamt

European
Patent Office

Office européen
des brevets

**EUROPÄISCHER RECHERCHENBERICHT**

**Nummer der Anmeldung**

EP 23 21 0560

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GRANATA G ET AL: "Simultaneous recycling of nickel metal hydride, lithium ion and primary lithium batteries: Accomplishment of European Guidelines by optimizing mechanical pre-treatment and solvent extraction operations", JOURNAL OF POWER SOURCES, ELSEVIER, AMSTERDAM, NL, Bd. 212, 10. April 2012 (2012-04-10), Seiten 205-211, XP028510464, ISSN: 0378-7753, DOI: 10.1016/J.JPOWSOUR.2012.04.016 [gefunden am 2012-04-16] | 1-12, 14-16 | INV. C22B3/32 B01D11/04 C22B3/38 C22B7/00 C22B3/00 |
| A | * Seite 206 - Seite 211; Abbildungen 8-10 * | 13 | |
| X | GIUSEPPE GRANATA ET AL: "Product recovery from Li-ion battery wastes coming from an industrial pre-treatment plant: Lab scale tests and process simulations", JOURNAL OF POWER SOURCES, ELSEVIER, AMSTERDAM, NL, Bd. 206, 18. Januar 2012 (2012-01-18), Seiten 393-401, XP028403134, ISSN: 0378-7753, DOI: 10.1016/J.JPOWSOUR.2012.01.115 [gefunden am 2012-02-02] | 1-12, 14-16 | |
| A | * Seite 394 - Seite 399; Abbildungen 5-8 * | 13 | |

RECHERCHIERTE SACHGEBIETE (IPC)

C22B
B01D

-/--

Der vorliegende Recherchenbericht wurde für alle Patentansprüche erstellt

| Recherchenort | Abschlußdatum der Recherche | Prüfer |
|---|---|---|
| Den Haag | 26. Mai 2024 | Panitz, J |

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 23 21 0560

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | RODRIGUES ISADORA R ET AL: "Separation of cobalt and nickel via solvent extraction with Cyanex-272: Batch experiments and comparison of mixer-settlers and an agitated column as contactors for continuous counter-current extraction", SEPARATION AND PURIFICATION TECHNOLOGY, ELSEVIER SCIENCE, AMSTERDAM, NL, Bd. 296, 29. Mai 2022 (2022-05-29), XP087099154, ISSN: 1383-5866, DOI: 10.1016/J.SEPPUR.2022.121326 [gefunden am 2022-05-29] * Seite 2 - Seite 9; Abbildungen 1,8-13 * ----- | 1-5,7-16 | |
| X | US 4 353 883 A (RICKELTON WILLIAM A ET AL) 12. Oktober 1982 (1982-10-12) * Spalte 2, Zeile 7 - Spalte 4, Zeile 54; Beispiele 1,2,4,7,8,18 * ----- | 1-16 | |
| X | US 3 666 446 A (COOK LORNE F ET AL) 30. Mai 1972 (1972-05-30) * Spalte 2, Zeile 47 - Spalte 8, Zeile 15; Beispiel 1 * ----- | 1-16 | **RECHERCHIERTE SACHGEBIETE (IPC)** |
| X | SATTAR RABIA ET AL: "Resource recovery of critically-rare metals by hydrometallurgical recycling of spent lithium ion batteries", SEPARATION AND PURIFICATION TECHNOLOGY, ELSEVIER SCIENCE, AMSTERDAM, NL, Bd. 209, 11. September 2018 (2018-09-11), Seiten 725-733, XP085506289, ISSN: 1383-5866, DOI: 10.1016/J.SEPPUR.2018.09.019 * Seiten 726-732; Abbildungen 8,9,11 * ----- | 1-16 | |

Der vorliegende Recherchenbericht wurde für alle Patentansprüche erstellt

| Recherchenort | Abschlußdatum der Recherche | Prüfer |
|---|---|---|
| Den Haag | 26. Mai 2024 | Panitz, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 21 0560

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-05-2024

| Im Recherchenbericht angeführtes Patentdokument | Datum der Veröffentlichung | Mitglied(er) der Patentfamilie | | Datum der Veröffentlichung |
|---|---|---|---|---|
| US 4353883 A | 12-10-1982 | KEINE | | |
| US 3666446 A | 30-05-1972 | CA | 922522 A | 13-03-1973 |
| | | DE | 2055503 A1 | 16-06-1971 |
| | | GB | 1336003 A | 07-11-1973 |
| | | US | 3666446 A | 30-05-1972 |
| | | ZA | 707348 B | 28-07-1971 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2614868 A

**In der Beschreibung aufgeführte Nicht-Patentliteratur**

- **D. DARVISHI et al.** Synergistic effect of Cyanex 272 and Cyanex 302 on separation of cobalt and nickel by D2EHPA. *Hydrometallurgy*, 2005, vol. 77, 227-238
- **P.K. PARHI et al.** Separation of cobalt and nickel from ammoniacal sulphate solution using Cyanex 272. *Separation and Purification Technology*, 2008, vol. 59, 310-317
- **B. SWAIN**. Extraction/Separation of Cobalt by Solvent Extraction: A Review. *Appl. Chem. Eng.*, 2015, vol. 26 (6), 631-639
- **K. OMELCHUK et al.** New Cationic exchangers for the recovery of cobalt(I), nickel(I) and manganese(I) from acidic chloride solutions: Modelling of extraction curves. *Hydrometallurgy*, 2018, vol. 180, 96-103
- **N.B. DEVI et al.** Separation and recovery of cobalt(II) and nickel(II) from sulphate solutions using sodium salt of D2EHPA, PC 88A and Cyanex 272. *Hydrometallurgy*, 1998, vol. 49, 47-61